# EUROPEAN PATENT SPECIFICATION

(11) **EP 2 782 788 B1**
(45) Date of publication and mention of the grant of the patent: **28.09.2016**
(21) Application number: 12808520.6
(22) Date of filing: 21.11.2012
(51) Int. Cl.: B60R 16/02, H02G 3/04, H01B 13/016, H01B 9/04

(54) **METHOD FOR MANUFACTURING WIRE HARNESS AND METHOD FOR MANUFACTURING AND ARRANGING THE SAME**
VERFAHREN ZUR HERSTELLUNG EINES KABELBAUMS UND VERFAHREN ZU SEINER HERSTELLUNG UND ANORDNUNG
PROCÉDÉ DE FABRICATION DE FAISCEAU DE FILS ET PROCÉDÉ D'AGENCEMENT DE CE DERNIER

(30) Priority: 21.11.2011 JP 2011253424
(43) Date of publication of application: 01.10.2014
(73) Proprietor: Yazaki Corporation, Minato-ku Tokyo 108-8333 (JP)
(72) Inventor: HASHIZAWA, Shigemi, Kosai-shi Shizuoka 431-0431 (JP); ICHIKAWA, Hidehiro, Kosai-shi Shizuoka 431-0431 (JP); TOHYAMA, Eiichi, Kosai-shi Shizuoka 431-0431 (JP)
(74) Representative: Grünecker Patent- und Rechtsanwälte PartG mbB
(86) International application number: PCT/JP2012/080803
(87) International publication number: WO 2013/077460

(56) References cited:
- JP-A- 2004 171 952
- US-A1- 2005 162 015
- US-A1- 2006 272 845

## Description

### Technical Field

The invention is related to a method for manufacturing a high voltage wire harness to be arranged in a movable body, such as an automobile, and a manufacturing and arranging method for the same.

### Background Art

A high voltage wire harness has been used in order to electrically connect devices of a hybrid automobile and a pure electric vehicle. The devices include, for example, a motor unit, an inverter unit, and a battery.

A wire harness described in connection with PTL 1 includes three electric wires for electrically interconnecting the devices, a main shield for accommodating a great part of an entire length of the three electric wires, and a sub-shield for covering the three electric wires extending from an end of the main shield. Depending on locations where the devices are to be installed, an arranging pathway along which the wire harness is to be laid is very long.

Each of ends of the three electric wires is equipped with an end hardware. After manufacturing of the wire harness, the end hardware is inserted into a shield case of the device along with the ends of the electric wires and connected to connect portions at predetermined positions on an device body by means of; for instance, bolting.

A conductive metal pipe is used for the main shield. In order to reduce a diameter of the main shield, an inner diameter of the main shield is set to a size that enables insertion of only three electric wires. For this reason, work for attaching the end hardware to respective ends of the three electric wires can be performed only case of the device along with the ends of the electric wires and connected to connect portions at predetermined positions on an device body by means of; for instance, bolting.

A conductive metal pipe is used for the main shield. In order to reduce a diameter of the main shield, an inner diameter of the main shield is set to a size that enables insertion of only three electric wires. For this reason, work for attaching the end hardware to respective ends of the three electric wires can be performed only after insertion of the three electric wires into the main shield. The reason for this is that the main shield is not formed in an inner diameter that enables insertion of three electric wires respectively equipped with end hardware.

The sub-shield includes a braid formed in a tubular shape, a shield shell fastened to one end of the braid, and a connecting pipe fastened to another end of the braid. The braid and the shield shell are superposed one on top of the other, and a shield ring is placed on the overlap. Subsequently, the shield ring is crimped to thus be fastened. Such fastening work is also adopted for fastening the braid to the connecting pipe. Specifically, the braid and the connecting pipe are superposed one on top of the other, and a crimping ring is placed on the overlap. Subsequently, the crimping ring is treated to crimping, to thus be fastened.

A metal pipe that is the same as the main shield in terms of a material and an inner diameter is used for the connecting pipe. The connecting pipe is formed so as to become by far shorter than the main shield. After being brought into line with an end of the main shield, an end of the connecting pipe is welded.

Specifically, when the main shield is bent while the three electric wires remain inserted into the main shield made from a metal pipe, the electric wires in the main shield assume different bent states according to whether the electric wires are located on an inner radius side or an outer radius side of each of the ends. In other words, each of the three electric wires has a different bend radius. Since the difference in bend radius among the electric wires builds up by an amount corresponding to the number of bends. As a result, the ends of the electric wires come ragged at the end of the wire harness, thereby generating comparatively large gaps. They may hinder establishment of a connection between the wire harness and the device.

A conceivable countermeasure against the problems is to control a length of electric wires in consideration of the gaps occurred at the respective bends. Since the state of electric wires accommodated in the main shield, however, is not constant, controlling the wire length encounters an extreme difficulty. Accordingly, work for aligning the positions of the ends of the electric wires is required in a final phase of processes for manufacturing the wire harness, which raises a problem of a deterioration in ease of manufacturing of a wire harness.
Document US 2006/0272845 A1 discloses a hybrid vehicle rigid routing cable assembly.

### Citation List

### [Patent Literature]

[PTL 1] JP-A-2004-171952

### Summary of Invention

### Technical Problem

It is therefore one advantageous aspect of the present invention to provide a method for manufacturing a wire harness and a manufacturing and arranging method for the same that enable enhancement of ease of manufacturing.

### Solution to Problem

According to one aspect of the present invention, there is provided a method for manufacturing a wire harness, as claimed in claim 1.

In the treating of the ends, the ends of the conductive paths may be treated with extra length portions respectively.

### Advantageous Effects of Invention

According to the invention, a conductive wire to be inserted into a tubular body is embodied as a coaxial composite wire having a single wire configuration. Therefore, both ends of the conductive wire can be treated before bending of the tubular body. Thus, there is yielded an advantage of the ability to enhance ease of manufacturing than ever. Moreover, according to the invention, each of the ends of the coaxial composite wire has an extra length portion. Hence, there are yielded an advantage of the ability to connect the wire harness to; for instance, device, with an allowance and another advantage of the ability to form a connecting portion with an inserted into the tubular body; and
bending the tubular body to form a wire harness having a shape corresponding to an arrangement pathway, in a state where the ends of the conductive paths are treated.

According to another aspect of the present invention, there is provided a method for manufacturing and arranging a wire harness, comprising:
preparing a coaxial composite wire in which a plurality of conductive paths are coaxially arranged;
inserting the coaxial composite wire into a tubular body;
treating ends of the conductive paths in a state the coaxial composite wire is inserted into the tubular body;
bending the tubular body to form a wire harness having a shape corresponding to an arrangement pathway, in a state where the ends of the conductive paths are treated; and
assembling the wire harness to an object having the arrangement pathway.

In the treating of the ends, the ends of the conductive paths may be treated with extra length portions respectively.

### Advantageous Effects of Invention

According to the invention, a conductive wire to be inserted into a tubular body is embodied as a coaxial composite wire having a single wire configuration. Therefore, both ends of the conductive wire can be treated before bending of the tubular body. Thus, there is yielded an advantage of the ability to enhance ease of manufacturing than ever. Moreover, according to the invention, each of the ends of the coaxial composite wire has an extra length portion. Hence, there are yielded an advantage of the ability to connect the wire harness to; for instance, device, with an allowance and another advantage of the ability to form a connecting portion with an allowance.

Brief Description of Drawings
Figs. 1A to 1C are diagrams of a method for manufacturing a wire harness and a manufacturing and arranging method for the same according to a first embodiment of the invention. Fig. 1A is a diagrammatic illustration showing a arranged state of the wire harness, Fig. 1B is a configuration diagram of the wire harness, and Fig. 1C is a flowchart of the manufacturing cable-arranging method for the wire harness.
Figs. 2A and 2B are diagrams of a configuration of a coaxial composite wire. Fig. 2A is a perspective view, and Fig. 2B is a cross sectional view.
Fig. 3 is a diagram showing working of ends of the coaxial composite wire;
Figs. 4A and 4B are diagrams showing bending of a tubular body. Fig. 4A is a perspective view of the tubular body before bending, and Fig. 4B is a perspective view of the bent tubular body.
Fig. 5 is a diagram of a shield structure provided at an end side.
Figs. 6A and 6B are diagrams showing a difference between states of projection of the conductive paths achieved when the conductive paths are bent. Fig. 6A is a diagram of the coaxial composite wire, and Fig. 6B is a diagram of a comparative example in which a plurality of conductive paths are used.
Figs. 7A and 7B are diagrams showing a difference between spaces to be assured during conveyance. Fig. 7A is a diagram achieved when the tubular body is conveyed in a substantially straight manner, and Fig. 7B is a diagram of a comparative example achieved when the tubular body is conveyed while bent in agreement with a arranging pathway.
Figs. 8A and 8B are diagrams showing a configuration of a coaxial composite wire of according to a second embodiment of the invention. Fig. 8A is a perspective view, and Fig. 8B is a cross sectional view.

### Description of Embodiments

In a method for manufacturing a wire harness and a manufacturing and arranging method for the same of the invention, a coaxial composite wire into which a plurality of paths are coaxially arranged in one is used as a conductive wire and that both ends of the conductive wire can be treated before a tubular body is bent.

A coaxial composite wire is formed by means of coaxially tying a plurality of paths into one double circuitry (two paths), triple circuitry (three paths), quadruple circuitry (four paths), ... n-fold circuitry ("n" paths). Specifically, a second conductive path and a second insulator are provided outside a first conductive path and a first insulator. Double circuitry is thereby made. In addition, a third conductive path and a third insulator are provided outside the second conductive path and the second insulator, whereby triple circuitry is made. Further, a fourth conductive path and a fourth insulator are provided outside the third conductive path and the third insulator, whereby quadruple circuitry is made. Moreover, "n" conductive paths and "n" insulators are provided outside the quadruple circuitry, whereby "n"-fold circuitry is made. A coaxial composite wire having a coaxial single path configuration can thus be obtained.

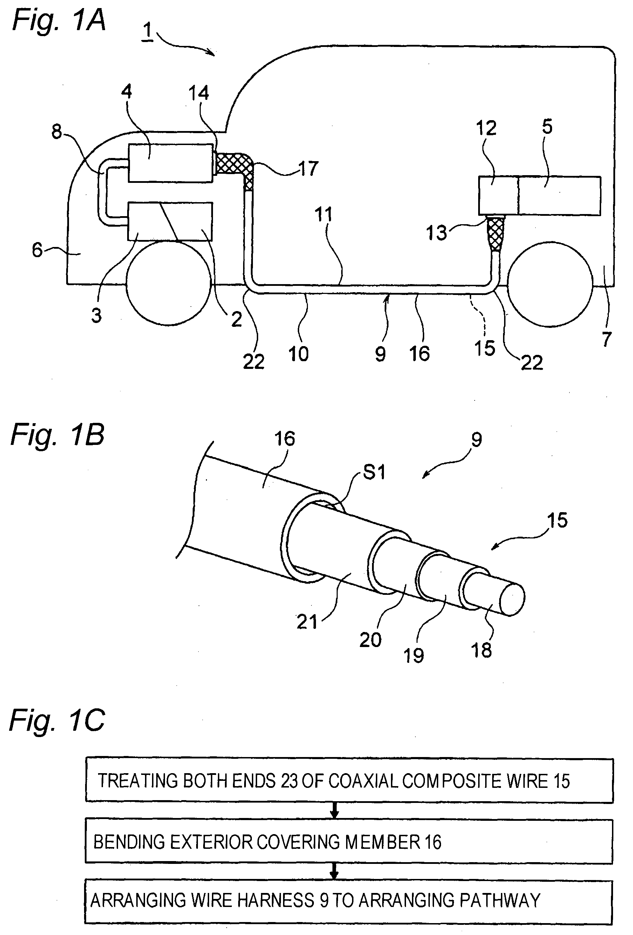

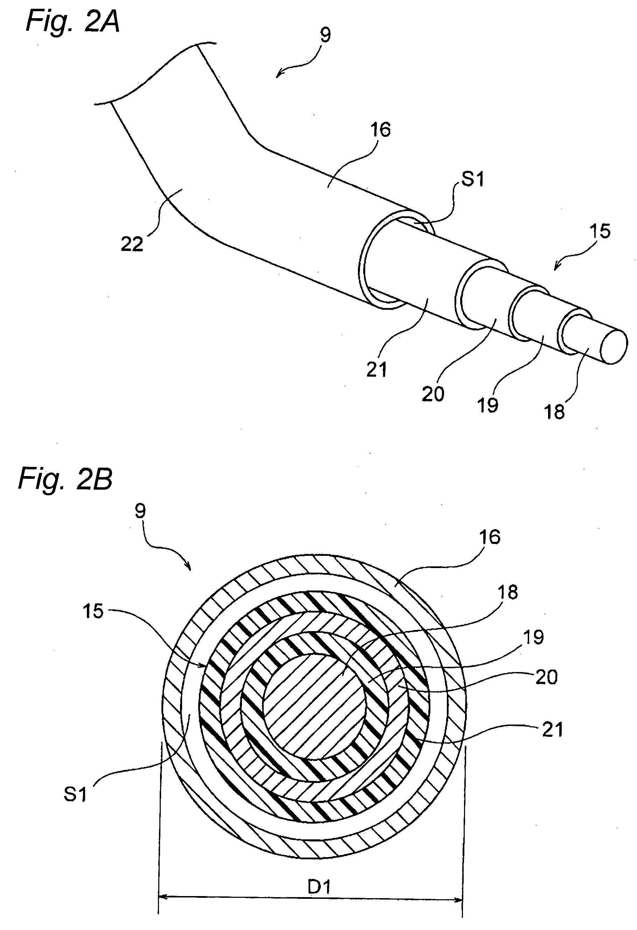

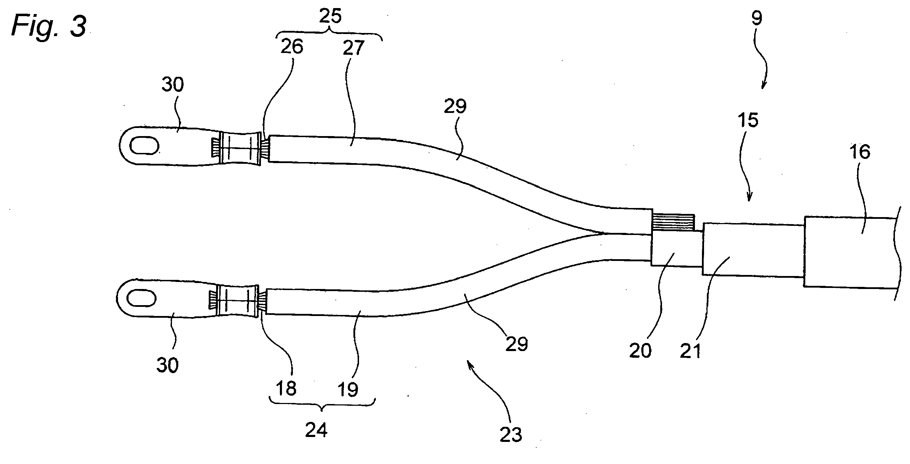

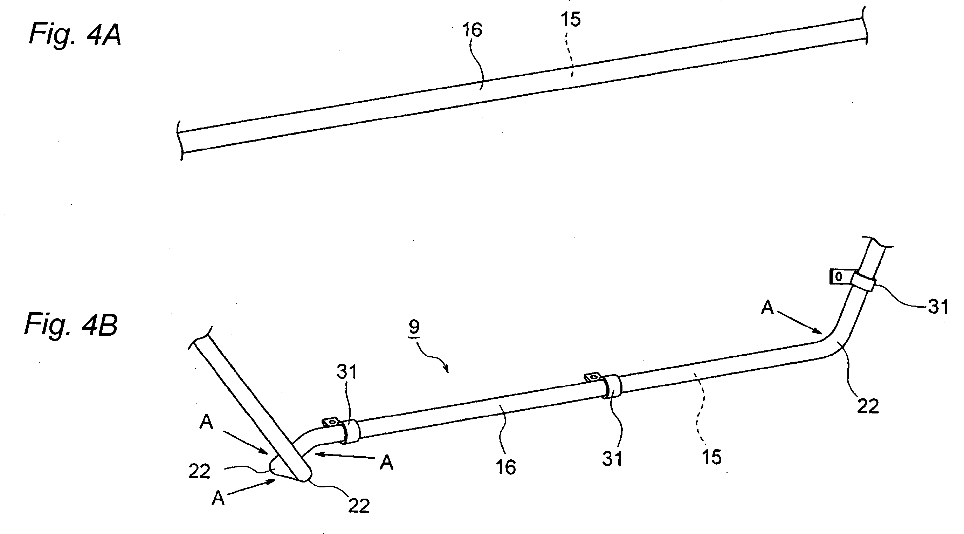

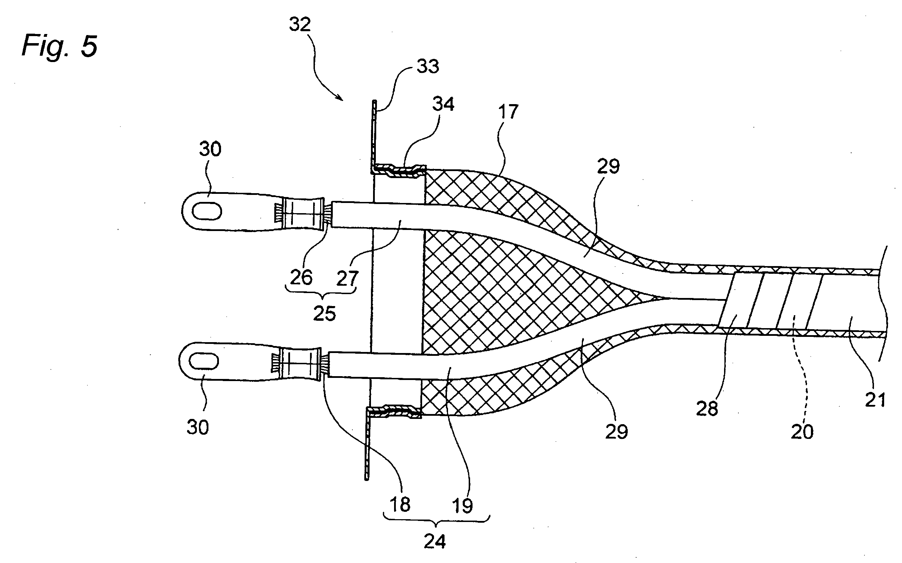

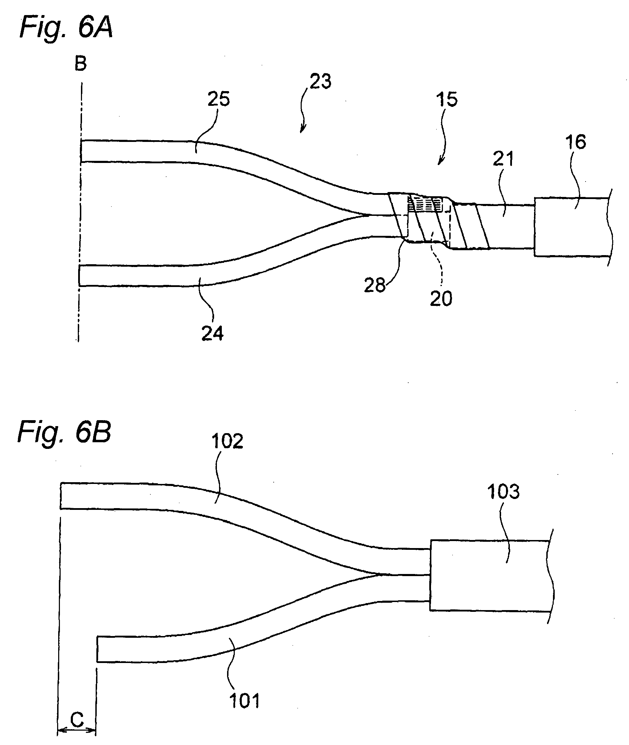

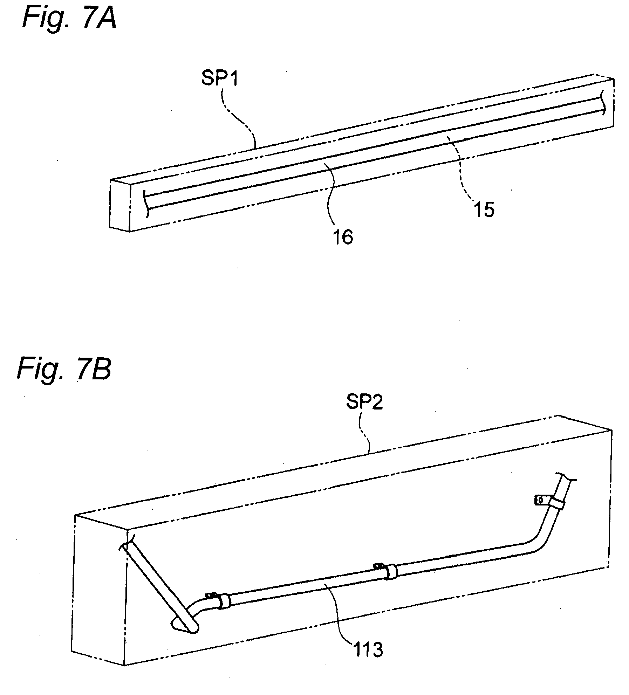

A first embodiment is hereunder described by reference to the drawings. Figs. 1A to 1C are diagrams of a method for manufacturing a wire harness and a manufacturing and arranging method for the same of the invention. Fig. 1A is a diagrammatic illustration showing an arranged and arranged state of a wire harness, Fig. 1B is a configuration diagram of the wire harness, and Fig. 1C is a flowchart of the manufacturing cable-arranging method for the wire harness. Figs. 2A and 2B are diagrams of a configuration of a coaxial composite wire. Fig. 3 is a diagram showing working of ends of the coaxial composite wire. Figs. 4A and 4B are diagrams showing bending of a tubular body. Fig. 5 is a diagram of a shield structure provided at an end side. Figs. 6A and 6B are diagrams showing a difference between states of projection of the conductive paths achieved when the conductive paths are bent. Figs. 7A and 7B are diagrams showing a difference between spaces to be assured during conveyance.

The embodiment shall be explained by reference to an example in which a hybrid automobile adopts the wire harness of the invention. The hybrid vehicle can also be either a pure electric vehicle or a common automobile.

In Figs. 1A, 1B, and 1C, reference numeral 1 designates a hybrid automobile. The hybrid automobile 1 is a vehicle that is driven by a mixture of two power sources; namely, an engine 2 and a motor unit 3 and is configured in such a way that the motor unit 3 is supplied with electric power from a battery 5 (a battery pack) by way of an inverter unit 4. The engine 2, the motor unit 3, and the inverter unit 4 are mounted in an engine room 6 where front wheels, or the like, are situated, in the embodiment. The battery 5 is mounted in an automobile rear block 7 where rear wheels, or the like, are situated. The battery can also be mounted in an automobile compartment located behind the engine room 6.

The motor unit 3 and the inverter unit 4 are connected to each other by means of a known high voltage wire harness 8. The battery 5 and the inverter unit 4 are connected together by means of a wire harness 9 of the invention (i.e., a high voltage wire harness for an automobile). The wire harness 9 is configured as one intended for use with a high voltage. An intermediate portion 10 of the wire harness 9 is arranged on a ground side of a vehicle body underfloor portion 11. The wire harness 9 is also arranged substantially in parallel with the vehicle body underfloor portion 11. The vehicle body underfloor portion 11 corresponds to both a known body and a so-called panel member. A through hole (whose reference numeral is omitted) is formed in a predetermined position. The wire harness 9 is inserted into the through hole.

The wire harness 9 and the battery 5 are connected to each other by way of a junction block 12 provided for the battery 5. A rear end 13 of the wire harness 9 is electrically connected to the junction block 12 by means of a known method. A front end 14 of the wire harness 9 is electrically connected to the inverter unit 4 by means of a known method.

An exemplary connecting portion embodied by the foregoing electrical connection is now described by reference to Figs. 3 and 5.

The motor unit 3 includes a motor and a generator. Further, the inverter unit 4 includes an inverter and a converter. The motor unit 3 is formed as a motor assembly including a shielding case. The inverter unit 4 is also formed as an inverter assembly including a shielding case. The battery 5 is a Ni-MH-based or Li-ion-based battery and assumed to be module-configured. For instance, a rechargeable battery which is a capacitor for example, can also be used. The battery 5 is not limited to any specific type, so long as it can be used for the hybrid automobile 1 or the pure electric vehicle.

First, a configuration and a structure of the wire harness 9 are described. The wire harness 9 is, as mentioned above, a high voltage member for electrically connecting the inverter unit 4 to the battery 5 and includes a coaxial composite wire 15, an exterior covering member 16 (a tubular body), and an electromagnetic shield member 17.

In the embodiment, when the exterior covering member 16 has a shielding function, the electromagnetic shield member 17 is formed as one connected to both ends of the exterior covering member 16. In the meantime, when the exterior covering member 16 does not have a shielding function, the electromagnetic shield member 17 is formed so as to extend long from the inverter unit 4 to the battery 5. Moreover, when the exterior covering member 16 does not have the shielding function, the electromagnetic shield member 17 is interposed between the coaxial composite wire 15 and the exterior covering member 16. A known braid, a known metallic foil single body or a shield member including metallic foil is assumed to be adopted as the electromagnetic shield member 17. The electromagnetic shield member 17 is connected to a shielding case, or the like, of the inverter unit 4 directly or by way of a shield shell 32 (see Fig. 5) to be described later or an unillustrated connector.

In Figs. 1A to 1C and Figs. 2A and 2C, the coaxial composite wire 15 is configured such that only one wire includes both a plus circuit and a minus circuit; specifically, such that double circuitry is accommodated in the wire. More specifically, the coaxial composite wire 15 is configured so as to include a first conductive path 18 that is situated at a center of the coaxial composite wire 15 and that has a circular cross sectional profile; a first insulator 19 that sheathes an outer periphery of the first conductive path 18 in a predetermined thickness; a second conductive path 20 laid outside the first insulator 19; and a second insulator 21 that sheathes an outer periphery of the second conductive path 20 in a predetermined thickness.

In the configuration of the coaxial composite wire 15, the first conductive path 18 is assumed to correspond to either a plus conductor or a minus conductor. The second conductive path 20 is assumed to correspond to a remaining one of the two.

The first conductive path 18 is manufactured from copper, a copper alloy, aluminum, or an aluminum alloy. The first conductive path 18 can also adopt a conductor structure made by twisting strands or a rod-shaped conductor structure assuming; for instance, a circular cross sectional profile. For example, a conductor structure that will make up a round single core.

The first insulator 19 is a sheath for the first conductive path 18 and formed by extruding a known resin material.

The second conductive path 20 is manufactured from copper, a copper alloy, aluminum or an aluminum alloy. The second conductive path 20 is not restricted to any specific structure, so long as the second conductive path can exhibit the function of a remaining one of the two; namely, the plus conductor and the minus conductor.

A braided conductor made by braiding electrically conductive strands into a tubular shape is assumed to be provided as an example of the second conductive path 20. A metal foil conductor formed by making electrically conductive metal foil into a tubular shape is provided as an example second conductive path 20. In addition, a spiral conductor made by turning an electrically conductive metal wire into a spiral structure is also provided as the example. A metal wire having a circular or rectangular cross sectional profile, a metal wire having the shape of a band plate, a metal wire made up of a bare electric wire, and the like, are provided as metal wires for the spiral conductor.

A pipe conductor made up of an electrically conductive metal pipe is provided as an example of the second conductive path 20. The metal pipe is manufactured by extrusion or rounding a metal plate into a pipe shape. The example of the second conductive path 20 includes a strand conductor that is made by placing a plurality of electrically conductive strands around the first insulator 19 or a strand conductor made by unbraiding a bare wire and placing the thus-unbraided wire around the first insulator 19. Moreover, a tape conductor using an electrically conductive metal tape is provided as an example of the second conductive path 20.

A conductor cross sectional area of the second conductive path 20 is set so as to be commensurate with a conductor cross sectional area of the first conductive path 18. If the second conductive path 20 is formed from a braided conductor, a spiral conductor, or a strand conductor, the second conductive path 20 may become longer than the first conductive path 18 in terms of the length of the conductor. In such a case, it is effective to make the conductor cross sectional area of the second conductive path 20 slightly larger than that of the first conductive path 18 so as to absorb a difference in conductor length.

In relation to the conductor cross sectional area, the conductor cross sectional area of the second conductive path 20 is made slightly larger when the conductor cross sectional area (or a conductor diameter) of the second conductive path 20 is set so as to be exactly commensurate with a value of an electric current flowing through the first conductive path 18 that is to act as a strand. If the conductor cross sectional area of the second conductive path 20 is set while making an allowance rather than being set so as to exactly match that of the first conductive path 18, the conductor cross sectional area of the second conductive path 20 can also be made equal (equivalent) to that of the first conductive path 18 without an increase. If the allowance is made, the conductor cross sectional area of the second conductive path 20 can also be made slightly smaller.

If the conductor cross sectional area of the second conductive path 20 is made slightly larger, a slight increase will occur in the number of strands when the second conductive path 20 is; for instance, a strand conductor, and will not affect the diameter of the coaxial composite wire 15. In the meantime, if the conductor cross sectional area of the second conductive path 20 is set while making an allowance for the value of the electric current flowing through the first conductive path 18, making the conductor cross sectional area of the second conductive path 20 slightly smaller is effective for reducing the diameter of the coaxial composite wire 15.

Even when the conductor cross sectional area of the second conductive path 20 is set while making an allowance for the value of the electric current flowing through the first conductive path 18, the conductor cross sectional area including the allowance is extremely small and will not affect the diameter of the coaxial composite wire 15.

In addition to this, since the conductor cross sectional area of the second conductive path 20 is set in accordance with the conductor cross sectional area of the first conductive path 18, a thickness (wall thickness) of the second conductive path 20 will not increase even when the second conductive path 20 is a pipe conductor made of; for instance, a metal pipe. As a matter of course, the coaxial composite wire 15 will be significantly smaller than a metal pipe hitherto used as an exterior covering member in terms of a thickness and a diameter.

The second insulator 21 is a sheath for the second conductive path 20 and formed by extrusion of a known resin material. The second insulator 21 is formed to protect the second conductive path 20 and to insulate the second conductive path 20 from a member that exhibits a shielding function.

The exterior covering member 16 is a tubular body made of metal; namely, a metal tubular body, and formed so as to have a length necessary for accommodating the coaxial composite wire 15. The exterior covering member is not restricted to a metal tubular body but can also be a tubular body made of a resin or elastomer, so long as the tubular body can be bent. In the embodiment, the exterior covering member 16 has a circular cross sectional profile. The cross sectional profile shall be a mere example and may also be an ellipsoidal shape, an oval shape, or a rectangular shape. Such an exterior covering member 16 is bent in conformance with a arranging pathway. Reference numeral 22 designates a bend. Timing at which bending is to be performed (i.e., timing for making the bends 22) will be described later by reference to Figs. 4A and 4B.

An aluminum pipe having a circular cross sectional profile (shall be a mere example) is used for the exterior covering member 16 in the embodiment. The exterior covering member 16 is formed so as to have an inner diameter that enables accommodation of the coaxial composite wire 15. The exterior covering member 16 has a thickness of being able to exhibit a protective function. Since coaxial composite wire 15 is accommodated in the exterior covering member 16, an outer diameter D1 is set to a comparatively small value.

The reason for the outer diameter D1 becoming comparatively smaller is that the coaxial composite wire 15 has a configuration of a single wire coaxially including a plurality of paths and that the exterior covering member 16 has a size so as to accommodate the coaxial composite wire 15. By reference to a comparative example, an explanation will now be given to a case where the exterior covering member 16 will be smaller in diameter than the comparative example.

Accordingly, since the coaxial composite wire 15 is formed into one by means of arranging a plurality of paths in a coaxial layout, so that the diameter of the coaxial composite wire 15 can be made smaller. In relation to the exterior covering member 16, since the diameter of the coaxial composite wire 15 can be made smaller as mentioned above, the diameter of the exterior covering member 16 that accommodates the coaxial composite wire 15 having such a small diameter can also be made smaller.

Since the smaller diameters are achieved as mentioned, the wire harness 9 can be arranged with a larger distance from the ground when arranged at the predetermined position on the hybrid automobile 1.

As can be seen from Fig. 2B, occupancy of the clearance S1 existing between the coaxial composite wire 15 and the exterior covering member 16 has become smaller (i.e., an air layer has become smaller). Accordingly, even if an amount of heat building up in the coaxial composite wire 15 is large, the space to be filled with heat is small, which yields an advantage of the space being cooled by the exterior covering member 16 before being filled with heat. The coaxial composite wire 15, under its own weight or an extra length, is configured so as to make a comparatively large contact with the interior surface of the exterior covering member 16. Accordingly, the heat building up in the coaxial composite wire 15 is easy to be transmitted to the exterior covering member 16, which yields an advantage of a high cooling function. The wire harness 9 is understood to exhibit a high heat radiation effect.

Manufacturing and arranging of the wire harness 9 are now described on the basis of the configuration and the structure that have been described thus far.

In the embodiment, the wire harness 9 is to be brought into an arranged state. As shown in Fig. 1C, the wire harness 9 will sequentially go through a first step, a second step, and a third step.

The first step is for performing work that treats both ends 23 of the coaxial composite wire 15. The second step is for performing work for bending the exterior covering member 16 having a substantially straight shape. Further, the third step is for performing work for arranging the wire harness 9 bent in conformity to an arranging pathway. The respective steps will be described hereunder more specifically.

In other words, the method for manufacturing and arranging the wire harness 9 includes: preparing the coaxial composite wire 15 in which the plurality of conductive paths 18 and 20 are coaxially arranged; inserting the coaxial composite wire 15 into the tubular body 16; treating ends 23 of the conductive paths 18 and 20 in a state the coaxial composite wire 15 is inserted into the tubular body 16; bending the tubular body 16 to form the wire harness 9 having a shape corresponding to the arrangement pathway, in a state where the ends 23 of the conductive paths 18 and 20 are treated; and assembling the wire harness 15 to an object having the arrangement pathway.

In Fig. 3, an end 23 of the coaxial composite wire 15 is shown. The ends 23 of the embodiment are formed into the following manner. Each of the ends 23 is formed so as to have a plus circuit 24 made up of the first conductive path 18 and the first insulator 19 and a minus-path-use electrical wire 25 to be electrically connected to the second conductive path 20. The plus path 24 and the minus-path-use electrical wire 25 are formed so as to extend by a predetermined length. The minus-path-use electrical wire 25 is connected to the second conductive path 20 by means of welding for example.

The minus-path-use electrical wire 25 is made up of a conductor 26 (a minus conductor) and an insulator 27 that sheaths the conductor 26. The minus-path-use electrical wire 25 is formed as a high-voltage-use electric wire (a conductive path). After being connected to the second conductive path 20, the minus-path-use electrical wire 25 is wound by means of an insulation tape 28 (see Fig. 5), whereby a connected portion of the electric wire is insulated.

The minus-path-use electrical wire 25 is previously formed in agreement with the length of the plus path 24. Specifically, the minus-path-use electrical wire 25 is formed so as to obviate a necessity for controlling its length in agreement with the plus path 24 after being connected to the second conductive path 20.

In relation to the ends 23, the plus path 24 and the minus-path-use electrical wire 25 are arranged and formed so as to situate outside the end of the exterior covering member 16. Each of the plus path 24 and the minus-path-use electrical wire 25 is formed with an extra length portion 29 so that the plus path 24 and the electrical wire 25 can be connected to the inverter unit 4, and the like, with a sufficient extra length.

In end work in which each of the ends 23 is treated, the first conductive path 18 at an end of the plus circuit 24 and the conductor 26 at an end of the minus-path-use electrical wire 25 are uncovered, and pieces of end hardware 30 having a predetermined shape are attached to the respective uncovered portions by means of crimping for example. The end work is thus completed.

Any of the following sequences can also be adopted when in the first step both ends are caused to finish undergoing end work. In one sequence, the coaxial composite wire 15 is inserted into the substantially-straight exterior covering member 16, and both of the ends 23 are treated to work. In another sequence, the coaxial composite wire 15 is inserted into the substantially-straight exterior covering member 16 after one of the ends 23 has been treated to end work, and then the other end 23 is treated to end work.

In Figs. 4A and 4B, there is performed, in the second step, work for bending the substantially-straight exterior covering member 16 into which the coaxial composite wire 15 has been inserted while its both ends have already finished undergoing end work, thereby forming the bends 22 at a plurality of positions designated by arrows A as illustrated in Fig. 4B. As a result of the plurality of bends 22 being formed in the second step, the wire harness 9 bent in conformity to the arranging pathway is thereby formed.

Reference numeral 31 designates stationary members affixed to an outer surface of the exterior covering member 16 by means of welding, or the like. In the embodiment, known clamps are adopted as the stationary members 31. The stationary members 31 are provided as members to be used when the intermediate portion 10 (see Fig. 1) of the wire harness 9 is affixed to the vehicle body underfloor portion 11 by means of assembly work (see Fig. 1).

In the third step, there is performed work for assembling and affixing the wire harness 9 that has the bent shape matching the arranging pathway to a predetermined position on the hybrid automobile 1 or connection work. By means of work, such as that pertaining to the third step, the arranging of the wire harness is completed as shown in Fig. 1A.

As shown in Fig. 5, a shield structure 32 is to be formed before or after the bending work pertaining to the second step or after both ends of the coaxial composite wire 15 have already finished undergoing end work in the first step. A structure for affixing a metal shield shell 33 to a end of the electromagnetic shield member 17 is adopted for the shield structure 32. Affixing of the shield shell 33 is performed by crimping the shield ring 34. In addition, another known structure that acts as a shield connector can also be adopted.

As has been described thus far by reference to Figs. 1A to 1C, Figs. 2A and 2B, Fig. 3, Figs. 4A and 4B, and Fig. 5, the wire harness 9 of the invention uses the coaxial composite wire 15 coaxially including a plurality of paths, and the exterior covering member 16 that is a tubular body accommodates the coaxial composite wire 15. Therefore, even when the exterior covering member 16 is bent, the coaxial composite wire 15 having a configuration of a single wire will not encounter a problem of misalignment of end positions (which will be described by reference to Figs. 6A and 6B). Specifically, a necessity for trimming work is obviated, which in turn enables attachment of the devices to end hardware 30 before bending of the exterior covering member 16.

Accordingly, the invention yields an advantage of the ability to enhance ease of manufacturing more than ever.

If attachment of the devices to the end hardware 30 becomes feasible before bending, bending work can be changed to a final step. For example, if a bender machine is installed in a vicinity of a line for arranging the wire harness 9 on the hybrid automobile 1 in an automobile assembling plant or a location near the automobile assembling plant, conveyance of a product can be carried out along a straight line up to this location. In other words, conveying the product while the wire harness is kept bent causes a problem of requirement of a larger space. In contrast, if the product can be conveyed in a straightforward manner, an attempt can be made to save the space (which will be described later by reference to Figs. 7A and 7B). Space saving achieved during conveyance is also effective for curtailing cost.

If attachment of the devices to the end hardware 30 can be performed before bending, the end work and the bending work can be performed individually at different locations. Accordingly, there is yielded an advantage of the ability to perform more efficient manufacturing.

In addition, if the coaxial composite wire 15 having the configuration of a single wire is adopted as mentioned above, a problem of misalignment of end positions will not occur. Therefore, even if there is a change in bend position, the change can be addressed up to a short delivery deadline.

Supplemental explanations are now given to the advantage of the ability to enhance ease of manufacturing and the other advantage of the ability to realize space saving.

In Fig. 6A, even when including a plurality of paths, the coaxial composite wire 15 has the configuration of a single wire. Therefore, even when the exterior covering member 16 is bent a number of times, positions B of the thermals can be aligned. Therefore, a shift of work to the end work can be smoothly carried out without involvement of trimming work.

In contrast, in the case of a comparative example shown in Fig. 6B, the comparative example is one in which a high voltage electric wire 101 for a plus circuit and a high voltage electric wire 102 for a minus circuit are inserted into an exterior covering member 103. Hence, when the exterior covering member 103 is bent a number of times, there is a sufficient probability that the positions of ends may become ragged by an amount corresponding to a dimension C, because the high voltage electric wires 101 and 102 are independent on a per-circuit basis. If the ends become ragged by the amount of dimension C, trimming work for aligning the end positions must be performed during the end work. Therefore, it is seen that the comparative example is inferior to the invention in terms of ease of manufacturing. Namely, the invention yields an advantage of the ability to enhance manufacturing.

In Fig. 7A, in order to convey (or reposit) the substantially-straight exterior covering member 16 while both ends of the coaxial composite wire 15 have already finished undergoing end work and while the coaxial composite wire 15 is inserted, space designated by a phantom line SP1 must be assured. In the meantime, in the case of the comparative example shown in Fig. 7B, the comparative example involves conveyance (reposition) of the exterior covering member 113 in a bent state, greater space designated by phantom line SP2 must be ensured. As a consequence, it is understood that the comparative example is inferior to the invention in terms of space efficiency achieved during conveyance (or reposition). In short, the invention yields an advantage of the ability of exhibit a space saving effect.

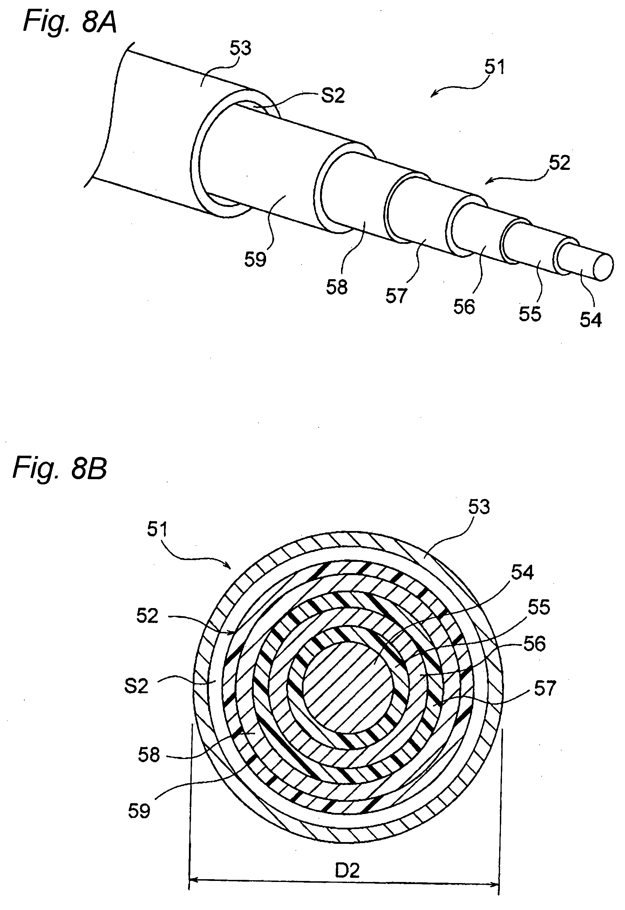

A second embodiment is hereunder described by reference to the drawings. Figs. 8A and 8B are diagrams showing a configuration of the coaxial composite wire of the second embodiment of the invention, wherein Fig. 8A is a perspective view and Fig. 8B is a cross sectional view.

In Figs. 8A and 8B, a wire harness 51 is a high voltage member and includes a coaxial composite wire 52 and an exterior covering member 53 (a tubular body). Although unillustrated, the electromagnetic shield member is identical with the electromagnetic shield member described in connection with the first embodiment.

The coaxial composite wire 52 is configured so as to include three paths (triple circuitry) in the form of a single path. Specifically, the coaxial composite wire 52 includes a first conductive path 54 that is situated at a center of the coaxial composite wire 52 and that has a circular cross sectional profile; a first insulator 55 that sheathes an outer periphery of the first conductive path 54 in a predetermined thickness; a second conductive path 56 laid outside the first insulator 55; a second insulator 57 that sheathes an outer periphery of the second conductive path 56 in a predetermined thickness; a third conductive path 58 laid outside the second insulator 57; and a third insulator 59 that sheathes an outer periphery of the third conductive path 58 in a predetermined thickness.

In relation to a configuration of the coaxial composite wire 52, given that the coaxial composite wire 52 is connected to; for instance, a motor, the first conductive path 54, the second conductive path 56, and the third conductive path 58 correspond to three conductive paths (three circuits) for three phase AC currents.

The first conductive path 54 is manufactured from copper, a copper alloy, aluminium, or an aluminum alloy. The first conductive path 54 can also adopt a conductor structure made by twisting strands or a rod-shaped conductor structure assuming; for instance, a circular cross sectional profile (e.g., a conductor structure that will make up a round single core).

The first insulator 55 is a sheath for the first conductive path 54 and formed by extruding a known resin material.

The second conductive path 56 is manufactured from copper, a copper alloy, aluminum or an aluminum alloy. The second conductive path 56 is identical with the second conductive path 20 described in connection with the first embodiment, and its explanation is omitted here for brevity.

The second insulator 57 is a sheath for the second conductive path 56 and formed by extruding a known resin material.

The third conductive path 58 is manufactured from copper, a copper alloy, aluminum or an aluminum alloy. The third conductive path 58 is identical with the second conductive path 56 and the second conductive path 20 described in connection with the first embodiment, and its explanation is omitted here for brevity.

The third insulator 59 is a sheath for the third conductive path 58 and formed by extruding a known resin material. In addition to being formed as a portion for protecting the third conductive path 58, the third insulator 59 is formed as a portion for insulating a member that exhibits a shield function from the third conductive path 58.

Although different in size, the exterior covering member 53 is basically configured in the same manner as is the exterior covering member 16 of the first embodiment. Since the coaxial composite wire 52 is accommodated in the exterior covering member 53, an outer diameter D2 of the exterior covering member 53 is set to a comparatively small value. The reason why the outer diameter D2 is comparatively small is that the coaxial composite wire 52 adopts a configuration of a single wire coaxially including a plurality of paths, and the essential requirement for the exterior covering member 53 is to be formed in a size at which the exterior covering member accommodates the coaxial composite wire 52.

As is seen from Fig. 8B, occupancy of the clearance S2 existing between the coaxial composite wire 52 and the exterior covering member 53 has become smaller (i.e., an air layer has become smaller). Accordingly, the heat building up in the coaxial composite wire 52 is likely to be transmitted to the exterior covering member 53, which yields an advantage of a high cooling function.

The advantages of the wire harness 51, such as that mentioned above, are identical with those described in connection with the first embodiment.

Although the invention has been illustrated and described for the particular preferred embodiments, it is apparent to a person skilled in the art that various changes and modifications can be made on the basis of the teachings of the invention. It is apparent that such changes and modifications are within the spirit, scope, and intention of the inventions as defined by the appended claims.

The coaxial composite wire 15 includes double circuitry (two paths) coaxially aligned in the form of a single wire. The coaxial composite wire 32 includes triple circuitry (three paths) coaxially aligned in the form of a single path. However, the coaxial composite wire is not restricted to those mentioned above and may also be formed by coaxially tying n-channel circuits ("n" paths) into the form of a single wire.

For instance, a low voltage fine conductive path (a low voltage electric wire) can also be accommodated in conjunction with the coaxial composite wire by utilization of; for example, the clearance S1 existing between the coaxial composite wire 15 and the exterior covering member 16.

In view of the above, according to the present invention, an conductive path to be inserted into a tubular body is embodied as a coaxial composite wire having a single wire configuration into which a plurality of paths are coaxially arranged. Hence, the conductive path does not have any configuration including a plurality of paths, each of which is provided for each path, like a related art electrical conducting path. Accordingly, even when the tubular body is bent, a difference will not arise in a bent state between an internal conductive path laid on an inner radius side of the bend in the tubular body and an internal conductive path laid on an outer radius side of the bend in the tubular body. As a consequence, ends of respective paths come into alignment at the respective ends of the conductive path. According to the invention, comparatively large gaps will not occur among paths, so that there is no necessity to perform, as end work, operation for aligning lengths of the conductive paths before attachment of devices to an end hardware, such as trimming work.

Consequently, according to the invention, misalignment of end positions respective paths, such as that mentioned above, is prevented. Both ends of the conductive path can be treated before the tubular body is bent. Thus, ease of manufacturing in a final phase of a wire harness manufacturing process can be enhanced.

Specific procedures, work, and the like, of the invention will be described in detail later in a subsequent embodiment section.

### Industrial Applicability

According to the invention, there is provided a method for manufacturing a wire harness and a manufacturing and arranging method for the same that enable enhancement of ease of manufacturing.

### Reference Signs List

- 1: HYBRID AUTOMOBILE (ARRANGING OBJECT)
- 2: ENGINE
- 3: MOTOR UNIT
- 4: INVERTER UNIT
- 5: BATTERY
- 6: ENGINE ROOM
- 7: AUTOMOBILE REAR PORTION
- 8: HIGH VOLTAGE WIRE HARNESS
- 9: WIRE HARNESS
- 10: INTERMEDIATE PORTION
- 11: VEHICLE BODY UNDERFLOOR PORTION
- 12: JUNCTION BLOCK
- 13: REAR END
- 14: FRONT END
- 15: COAXIAL COMPOSITE WIRE
- 16: EXTERIOR COVERING MEMBER
- 17: ELECTROMAGNETIC SHIELD MEMBER
- 18: FIRST CONDUCTIVE PATH
- 19: FIRST INSULATOR
- 20: SECOND CONDUCTIVE PATH
- 21: SECOND INSULATOR
- 22: BEND
- 23: END
- 24: PLUS PATH
- 25: MINUS-PATH-USE ELECTRIC WIRE
- 27: INSULATOR
- 28: INSULATION TAPE
- 29: EXTRA LENGTH PORTION
- 30: END HARDWARE
- 31: STATIONARY MEMBER
- 32: SHIELD STRUCTURE
- 33: SHIELD SHELL
- 34: SHIELD RING
- 51: WIRE HARNESS
- 52: COAXIAL COMPOSITE WIRE
- 53: EXTERIOR COVERING MEMBER
- 54: FIRST CONDUCTIVE PATH
- 55: FIRST INSULATOR
- 56: SECOND CONDUCTIVE PATH
- 57: SECOND INSULATOR
- 58: THIRD CONDUCTIVE PATH
- 59: THIRD INSULATOR

## Claims

1. A method for manufacturing and arranging a wire harness (9), comprising in order:
preparing a coaxial composite wire (15) in which a plurality of conductive paths (18, 20) are coaxially arranged;
inserting the coaxial composite wire (15) into a tubular body (16);
treating ends of the conductive paths (18, 20) in a state the coaxial composite wire (15) is inserted into the tubular body (16) so that the ends of the conductive paths (18, 20) have a plus circuit and an electric wire for a minus circuit;
bending the tubular body (16) to form a wire harness (9) having a shape corresponding to an arrangement pathway, in a state where the ends of the conductive paths (18, 20) are treated; and
assembling the wire harness (9) to an object (1) having the arrangement pathway, and making the plus and minus circuit connections.

2. The method according to claim 1, wherein
in the treating of the ends (23), the ends (23) of the conductive paths (18, 19) are treated with extra length portions respectively.

## Patentansprüche

1. Eine Methode zum Herstellen und Anordnen eines Kabelbaums (9), aufweisend die Reihenfolge:
Präparieren eines koaxialen Verbundkabels (15), bei dem eine Vielzahl von leitenden Pfaden (18, 20) koaxial angeordnet sind,
Einsetzen des koaxialen Verbundkabels (15) in einen Rohrkörper (16),
Bearbeiten von Enden der leitenden Pfade (18, 20) in einen Zustand, bei dem das Koaxialkabel (15) in dem Rohrkörper (16) eingesetzt ist, so dass die Enden der leitenden Pfade (18, 20) eine positive Leitung haben und einen elektrischen Draht für eine negative Leitung,
Biegen des Rohrkörpers (16) um einen Kabelbaum (9) mit einer Gestalt zu formen, die mit einem Anordnungsverlegepfad korrespondiert, in einen Zustand bei dem die Enden der leitenden Pfade (18, 20) bearbeitet sind, und
Montieren des Kabelbaums (9) an einem Objekt (1), das den Anordnungsverlegepfad hat und
Herstellen der positiven und negativen Leitungsverbindungen.

2. Die Methode gemäß Anspruch 1, wobei bei dem Bearbeiten der Enden (23), die Enden der leitenden Pfade (18, 19) mit extra Längenabschnitten entsprechend bearbeitet werden.

## Revendications

1. Procédé de fabrication et d'agencement d'un harnais de câblage (9), comprenant dans l'ordre :
la préparation d'un câble composite coaxial (15) dans lequel une pluralité de chemins conducteurs (18, 20) sont agencés coaxialement ;
l'insertion du câble composite coaxial (15) dans un corps tubulaire (16) ;
le traitement d'extrémités des chemins conducteurs (18, 20) dans un état où le câble composite coaxial (15) est inséré dans le corps tubulaire (16) de telle sorte que les extrémités des chemins conducteurs (18, 20) ont un circuit positif et un fil électrique pour un circuit négatif ;
la flexion du corps tubulaire (16) pour former un harnais de câblage (9) ayant une forme qui correspond à un chemin d'agencement, dans un état où les extrémités des chemins conducteurs (18, 20) sont traités ; et
l'assemblage du harnais de câblage (9) à un objet (1) comportant le chemin d'agencement, et la réalisation des connexions de circuit positives et négatives.

2. Procédé selon la revendication 1 dans lequel, lors du traitement des extrémités (23), les extrémités (23) des chemins conducteurs (18, 19) sont traitées respectivement avec des portions de longueur additionnelle.
